# FASCICULE DE BREVET EUROPEEN

(11) **EP 0 481 557 B1**
(45) Date de publication et mention de la délivrance du brevet: **26.04.1995**
(21) Numéro de dépôt: 91202632.5
(22) Date de dépôt: 10.10.1991
(51) Int. Cl.: B29C 45/14, B42D 15/02

(54) **Procédé de fabrication de carte à mémoire apte à recevoir une image photographique et carte ainsi obtenue**
Verfahren zum Herstellen einer Speicherkarte, geeignet zum Aufnehmen eines photographischen Bildes und so erhaltene Karte
Method for making a memory card suited to receive a photographic image and card thus obtained

(30) Priorité: 19.10.1990 FR 9013001
(43) Date de publication de la demande: 22.04.1992
(73) Titulaire: SCHLUMBERGER INDUSTRIES, F-92120 Montrouge (FR)
(72) Inventeur: Rose, René, F-78190 Voisin-le-Bretonneux (FR)

(56) Documents cités:
- EP-A- 0 340 099
- EP-A- 0 412 893
- FR-A- 2 145 135
- FR-A- 2 435 357

## Description

La présente invention a pour objet on procédé de fabrication de carte à mémoire apte à recevoir une image photographique et des cartes à mémoire obtenues par la mise en oeuvre dudit procédé.

Les cartes à mémoire sont maintenant d'un usage très répandu et elles peuvent être répertoriées en deux classes selon la nature de leur élément-mémoire. Dans la première classe de cartes, on trouve celles dans lesquelles la mémoire permettant l'enregistrement d'informations est constituée par une ou plusieurs pistes magnétiques solidaires du corps de la carte ou par un ou plusieurs supports d'enregistrement optique. La deuxième classe de cartes à mémoire dites cartes à mémoire électronique est constituée par les cartes dans lesquelles l'enregistrement des informations se fait dans des circuits intégrés électroniques constituant d'une part des zones mémoire et d'autre part des circuits de gestion de cette mémoire. Dans cette deuxième classe de cartes, le circuit intégré peut comporter en outre des circuits électroniques de traitement d'informations en vue de leur mémorisation dans les zones mémoire.

Pour ce deuxième type de cartes, il existe deux grandes catégories de transmission de l'information entre le circuit électronique de la carte et le lecteur de cartes. Selon le premier mode de transmission, la carte comporte des plages externes de contact électrique reliées aux circuits électroniques, ces plages externes permettant d'assurer un contact ohmique avec le connecteur du lecteur de carte. Ces contacts ohmiques servent d'une part à transmettre les informations entre le lecteur et les circuits de la carte et d'autre part à alimenter en énergie électrique les circuits de la carte puisque, le plus souvent, celle-ci ne comporte pas d'alimentation électrique propre. Le deuxième mode de dialogue avec le lecteur de carte consiste à réaliser entre le circuit de la carte et le lecteur de carte un couplage inductif qui permet la tranmission des informations et de l'énergie électrique nécessaire à l'alimentation des circuits de la carte.

L'invention concerne préférentiellement les cartes à mémoire électronique mais, comme on l'expliquera ultérieurement, elle est également applicable aux cartes à mémoire à pistes magnétiques.

Les cartes à mémoire, qu'elles soient électroniques ou à pistes magnétiques ou optiques, connaissent maintenant un grand nombre d'utilisations, telles que le paiement de communications téléphoniques, la gestion d'opérations bancaires ou encore le contrôle d'accès. Dans ce dernier cas, la carte comporte dans sa mémoire, qu'il s'agisse d'une mémoire électronique ou d'une piste magnétique ou optique, un numéro confidentiel qui permet l'accès à certains lieux ou éventuellement à certaines prestations. Pour pouvoir accéder au lieu protégé, le détenteur de la carte doit bien sûr introduire dans un lecteur de carte disposé à l'entrée du lieu protégé un numéro confidentiel en relation avec celui qui est mémorisé dans la carte. Cependant, afin d'améliorer encore ce contrôle d'accès, il est souvent nécessaire que la carte, que l'on appellera souvent un badge, comporte non seulement le numéro confidentiel d'accès mais également une photographie apparente du titulaire du badge.

Pour réaliser un tel badge, c'est-à-dire une carte avec une photographie du détenteur, en général on réalise d'abord une carte avec un corps de carte classique et un élément mémoire, soit une piste magnétique ou optique, soit un module électronique. Puis on réalise une photographie du détenteur du badge et on fixe cette photographie au dos du corps de la carte. Cette fixation doit bien sûr être aussi irréversible que possible. Ces opérations sont dans tous les cas longues et le collage de la photographie au dos de la carte est toujours délicat.

La demande de brevet européen n° 90402246.4 déposée le 06/08/1990, bénéficiant de la priorité de la date de dépôt d'une demande de brevet français du 07/08/1989 et étant publiée sous le n° EP-A1-0412893 le 12/02/1991 après la date de dépôt de priorité de la présente demande de brevet, propose l'incorporation d'une étiquette portant un graphisme préimprimé dans un corps d'une carte moulée. On pourrait s'imaginer qu'un tel graphisme soit un dessin, un logo du distributeur des cartes ou une reproduction imprimée d'une image photographique par exemple.

Bien que la carte selon l'EP-A1-0412893 évite les problèmes d'un collage d'une photographie au dos de la carte au cas où une telle carte devra servir comme badge, elle nécessite une photographie et sa reproduction sur un support de graphisme. Et dans tous les cas où un tel graphisme n'est pas imprimé en grand nombre, quasiment en série, la réalisation d'une telle carte à graphisme ne peut être effectuée pour des raisons économiques.

En outre, lorsque le badge doit être remis à un visiteur au poste de garde d'une zone contrôlée, les opérations qu'il faut réaliser, prise de la photographie, développement de celle-ci, collage de la photographie au dos de la carte, sont longues et donc mal perçues par le visiteur. Ces difficultés font que l'on renonce le plus souvent à délivrer au visiteur ce type de carte, ce qui a pour effet de dégrader sensiblement l'efficacité du contrôle.

Pour remédier à ces inconvénients, un objet de l'invention est de fournir un procédé de fabrication de cartes à mémoire aptes à recevoir une image photographique qui évite les opérations délicates énoncées ci-dessus en autorisant ainsi une beaucoup plus grande souplesse dans l'utilisation de badges à mémoire munis d'une photographie du détenteur.

Selon l'invention, le procédé de réalisation d'une carte à mémoire comprenant un élément mémoire et un corps de carte présentant deux faces principales sensiblement parallèles, une desdites faces principales étant munie d'un support photographique, se caractérise en ce qu'il comprend les étapes suivantes :
- on fournit un support photographique présentant une face sensible et ayant sensiblement les mêmes dimensions que ladite face principale ;
- on fournit un moule dont la cavité a la forme du corps de carte à réaliser ;
- on dispose dans la cavité du moule le support photographique de telle manière que sa face sensible soit maintenue contre une des parois internes de la cavité du moule qui définit la première face principale du corps de carte ;
- on injecte sous pression dans le moule un matériau plastique de telle manière qu'il remplisse la totalité de la cavité et qu'il adhère à la deuxième face du support photographique ;
- on démoule l'objet ainsi obtenu ; et
- on fixe sur la deuxième face principale du corps de carte l'élément mémoire.

On comprend que, ainsi, on obtient directement une carte à mémoire ayant les caractéristiques des cartes normales mais celles-ci comportent en outre à leur verso un support photographique déjà fixé de façon inamovible sur le corps de carte. Pour pouvoir délivrer à un visiteur un badge, il suffit de placer dans un appareil photographique la carte, d'impressionner ce support photographique, de le développer et d'inscrire dans la mémoire de la carte le numéro confidentiel d'accès.

Selon une variante du procédé de l'invention, on dispose en outre dans la cavité du moule un élément mémoire de telle manière que sa face d'accès soit maintenue contre la paroi interne de la cavité du moule qui définit la deuxième face principale du corps de carte. Lors du démoulage de la carte, on obtient ainsi une carte complète puisque l'élément mémoire a été fixé directement sur le corps de carte lors de l'opération de moulage.

L'invention concerne également des cartes à mémoire du type obtenu par la mise en oeuvre du procédé tel que défini ci-dessus.

D'autres caractéristiques et avantages de l'invention apparaîtront plus clairement à la lecture de la description qui suit de plusieurs modes de mise en oeuvre de l'invention donnés à titre d'exemples non limitatifs. La description se réfère aux figures annexées sur lesquelles :
- la figure 1 est une vue en coupe verticale d'un moule utilisable pour la réalisation d'un corps de carte selon un premier mode de mise en oeuvre de l'invention ;
- la figure 2 est une vue semblable à celle de la figure 1 mais correspondant à un deuxième mode de mise en oeuvre de l'invention ;
- la figure 3 est une vue semblable à celles des figures 1 et 2 mais correspondant à un troisième mode de mise en oeuvre de l'invention ;
- la figure 4 est une vue de dessus du verso d'une carte à mémoire électronique obtenue par la mise en oeuvre du procédé selon les figures 2 ou 3 ;
- la figure 5 est une vue de dessus du recto de la carte de la figure 4 ; et
- la figure 6 est une vue partielle en coupe verticale selon la ligne VI-VI de la figure 5.

Avant de décrire en détail l'invention, on va rappeler rapidement en quoi consiste une carte à mémoire électronique. En effet, de nombreux brevets décrivent déjà l'organisation de telles cartes et il n'est donc pas nécessaire de les décrire en détails. La carte est constituée par un corps de carte dont les dimensions sont : 0,8 mm d'épaisseur, 85 mm en longueur et 55 mm en largeur. Ce corps de carte qui doit satisfaire en outre aux spécifications de la norme ISO 7810 est le plus souvent réalisé en un matériau plastique afin de satisfaire en particulier aux normes relatives aux propriétés de flexion du corps de carte. Pour plus de détails sur cette norme, on pourra se reporter au brevet français No. 86/14231 déposé le 14 octobre 1986 et qui décrit de plus une technique de réalisation de corps de carte par moulage par injection. La carte comporte également un module électronique fixé dans le corps de carte. Ce module électronique est principalement constitué par un ou plusieurs circuits intégrés réalisés dans une ou plusieurs pastilles semi-conductrices. Ces circuits intégrés réalisent les circuits mémoire et dans certains cas des circuits de traitement de l'information. Dans le cas particulier de cartes à mémoire électronique à contact ohmique, la ou les pastilles semi-conductrices sont fixées sur un support qui comporte lui-même sur sa face externe, c'est-à-dire sur sa face tournée vers l'extérieur du corps de carte, des plages de contacts électriques pour assurer la liaison électrique avec le lecteur de carte lorsque la carte est introduite dans celui-ci. De tels lecteurs sont par exemple décrits dans les brevets américains Nos. 4 675 516, 4 902 233 ou 4 873 425. Le module électronique comporte également bien sûr des connexions électriques entre les bornes du circuit intégré et des plages de contact externe , ainsi qu'un matériau d'enrobage qui protège le circuit intégré et les connexions électriques avant son implantation dans le corps de carte. De tels modules électroniques sont également bien connus en eux-mêmes et ils sont notamment décrits dans les demandes de brevet suivantes : brevet américain No. 4 625 1032, brevet américain No. 4 737 620, demande de brevet européen No. 0 254 640, demande de brevet européen No. 0 371 855. L'invention concerne également le cas où la carte comporte plusieurs modules électroniques séparés. Une telle disposition est décrite dans la demande de brevet européen No. 0 262 036.

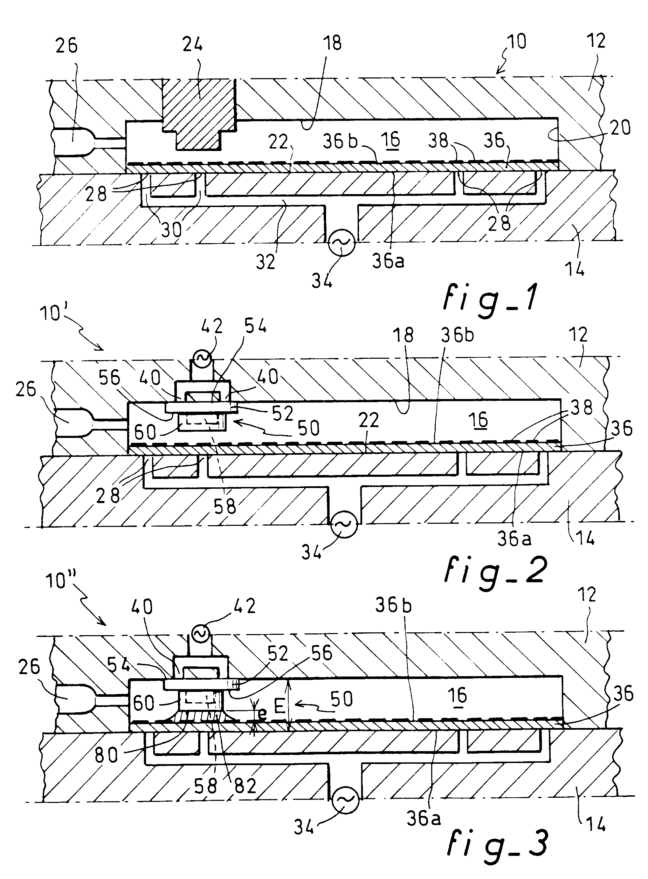

Sur la figure 1, on a représenté un moule 10 pour la réalisation d'une carte à mémoire électronique selon un premier mode de mise en oeuvre de l'invention. Le moule comporte une partie fixe 12 et une partie mobile 14. La partie fixe 12 définit une partie de la cavité interne ou empreinte 16 du moule et plus précisément elle définit une des faces principales 18 et la face latérale 20. La partie mobile 14 définit elle la deuxième face principale 22. La cavité 16 ainsi définie reproduit exactement la forme extérieure du corps de carte à réaliser. La partie fixe 12 comporte un noyau 24 qui fait saillie dans la face principale 18 pour définir, lors de la réalisation du corps de carte, une cavité utilisée pour mettre en place et fixer le module électronique de la carte. La partie fixe 12 comporte également une buse d'injection 26. Sur cette figure, on a représenté une seule buse d'injection 26 mais il va de soi que le moule pourrait en comporter davantage. La partie mobile 14 comporte dans sa face principale 22 une pluralité d'orifices tels que 28 qui sont reliés à des canaux 30 eux-mêmes reliés par le canal principal 32 à une pompe à vide 34.

On va maintenant décrire comment on réalise un corps de carte conforme à l'invention à l'aide du moule 10. Lorsque le moule est ouvert, c'est-à-dire lorsque les parties de ce moule 12 et 14 sont écartées, on met en place sur la face 22 de la partie 14 un support photographique à développement rapide portant la référence 36. Ce support photographique est en fait constitué, comme celà est connu, depuis sa face 36a, dite face sensible, jusqu'à sa face 36b, d'une feuille de protection, d'un film photographique et d'un papier photographique de développement. De préférence, la face 36b du papier de développement est recouverte d'éléments graphiques 38. Après la mise en place de cet ensemble 36 sur la face 22 du moule, on met en route le groupe de pompage 34 de telle manière que l'aspiration au niveau des orifices 28 maintienne l'ensemble de support photographique 36 en position avec sa face sensible 36a plaquée contre la face interne 22 du moule. On referme alors le moule 10 et on injecte dans la cavité 16 par la buse d'injection 26 un matériau plastique convenable. Ce matériau plastique peut être de l'ABS transparente. L'injection est réalisée jusqu'à ce que le matériau plastique remplisse la totalité de la cavité 16. Simultanément le matériau plastique adhère à la face postérieure 36b du support photographique. Après un refroidissement convenable, le moule est à nouveau ouvert et on en retire un corps de carte qui présente sur son verso le support photographique 36 et sur son recto une face plane dans laquelle débouche une cavité correspondant à la forme du noyau 24.

On voit qu'on obtient ainsi un corps de carte comportant le support photographique dans lequel il suffit de venir placer et fixer un module électronique pour obtenir une carte à mémoire électronique prête à l'emploi.

En se référant maintenant à la figure 2, on va décrire un deuxième mode de réalisation de carte à mémoire électronique. Le moule utilisé 10' est identique au moule 10 de la figure 1 à l'exception des particularités suivantes. Le noyau 24 faisant saillie dans la face 18 de la partie 12 du moule est supprimé et il est remplacé par des trous d'aspiration 40 reliés à un système de pompe à vide 42.

On va maintenant décrire le procédé de fabrication de la carte à mémoire électronique à l'aide du moule 10'. Comme on l'a déjà décrit en liaison avec la figure 1, on met en place l'ensemble support photographique 36 contre la paroi 22 du moule et on actionne la pompe à vide 34 afin de maintenir le support photographique 36 contre cette paroi, sa face sensible 36a étant plaquée contre celle-ci. Puis à l'aide d'un micromanipulateur, on met en place contre la paroi 18 du moule un module électronique 50 en regard des orifices d'aspiration 40 puis on met en route le groupe de pompage 42 pour maintenir le module électronique 50 plaqué contre la paroi 18 dans une position convenable. Le module électronique 50 a été représenté de façon schématique. On a fait figurer son circuit imprimé ou équivalent 52 qui comporte sur sa face d'accès 54 les plages externes de contact électrique. On a représenté également, solidaire de la deuxième face 56 du circuit imprimé 52, le circuit intégré 58 noyé dans un matériau d'enrobage 60 solidaire du circuit imprimé 52.

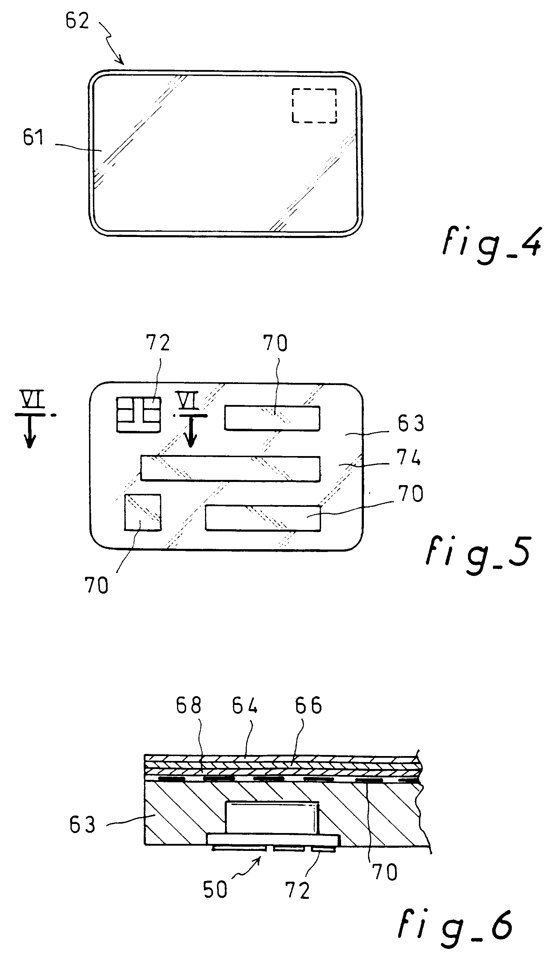

Après la mise en place du support photographique 36 et du module électronique 50, on referme le moule et on procède à l'injection du matériau plastique par la buse d'injection 26. Comme dans le cas précédent, le matériau d'injection est de préférence de l'ABS ou du polycarbonate transparent. Après que le matériau d'injection ait totalement rempli la cavité 16 du moule et que ce matériau ait adhéré d'une part à la face postérieure 36b du support photographique et d'autre part aux parois externes du module électronique 50 à l'exception bien sûr de sa face d'accès 54, on laisse l'ensemble refroidir puis on procède au démoulage. On obtient alors une carte à mémoire électronique complète qui est représentée sur les figures 4 à 6.

La figure 4 montre le recto 61 de la carte 62. Ce recto est constitué par le support photographique 36. Le support photographique 36 a bien sûr exactement la même forme et les mêmes dimensions que les faces principales du corps de la carte 62. La figure 6 montre plus en détail la façon dont est constitué le support photographique 36. Depuis sa face externe, dite sensible 36a, jusqu'à sa face postérieure 36b il comprend une couche détachable de protection 64 un film photographique 66 et un papier de développement 68. Ainsi, on retrouve les éléments habituels d'un film photographique à développement rapide. Selon le mode de mise en oeuvre décrit, le dos du papier de développement 68 comporte en outre un certain nombre de graphismes 70. La figure 6 montre également le module électronique 50 qui est noyé dans le corps 63 de la carte, à l'exception de sa face d'accès constituée par des plages externes de contacts électriques telles que 72. La figure 5 montre le recto 74 de la carte 62. Sur la figure 5 apparaissent les plages de contacts externes 72 du module électronique 50 ainsi que les éléments de graphisme 70 déjà décrits en liaison avec la figure 6. On rappelle que le matériau d'injection constituant le corps 62 de la carte est transparent. Ainsi les graphismes 70 disposés sur la face 36b du support de film photographique apparaissent sur la face avant 74 ou recto de la carte. Compte tenu de la faible épaisseur du corps de carte qui est de 0,8 mm, les graphismes 70 ne sont pas altérés par la couche de matériau transparent et l'effet de paralaxe est négligeable compte tenu de cette faible épaisseur.

On voit qu'ainsi, grâce à l'invention, on obtient une carte 60 qui présente un recto 74 identique aux cartes classiques avec son ensemble de plages de contacts externes 72 et des graphismes 70 et dont le verso comporte un ensemble de film photographique à développement rapide prêt à l'emploi et qui est fixé de façon inamovible lors du moulage sur le verso du corps de carte.

Pour personnaliser la carte ainsi obtenue, c'est-à-dire pour l'adapter à un détenteur particulier, il suffit d'introduire la carte dans un appareil de photographie à développement rapide. Lors de la prise d'image du détenteur, la couche de protection 64 est enlevée et l'image est formée sur le film photographique 66 puis, selon les techniques bien connues de développement rapide, cette image est transférée sur le papier de développement 68 où la photographie est fixée. Simultanément où à l'aide d'un autre appareil, on programme le circuit électronique du module électronique 50 pour introduire dans la mémoire de celui-ci l'information confidentielle d'identification et éventuellement d'autres informations telles qu'une caractérisation et différents types de locaux auxquels le détenteur de la carte pourra avoir accès moyennant la présentation de cette carte et son introduction dans un lecteur de carte correspondant. Lors de cette programmation, il est possible également selon le type de circuit électronique utilisé d'introduire des éléments de programmation des circuits de traitement du module électronique qui permettront ultérieurement, par exemple, de mémoriser les dates d'accès à tel ou tel lieu ainsi que les références du lieu ou des lieux auxquels le détenteur de la carte a eu accès.

On voit qu'ainsi le procédé selon l'invention permet la réalisation de cartes directement utilisables sans qu'il y ait d'opérations de collage d'un cliché photographique au dos de la carte. Cette disposition permet de plus d'éviter toute erreur dans la relation qui doit exister entre l'image photographique au verso de la carte et les éléments de programmation et les informations stockées dans la mémoire du module électronique 50 de la carte.

La figure 3 illustre un troisième mode de mise en oeuvre de l'invention. Le moule 10'' utilisé est identique au moule 10' de la figure 2. On ne le décrira donc pas à nouveau. Le procédé se distingue de celui de la figure 2 par la façon dont le module électronique 50 et le support photographique 36 sont mis en place dans le moule 10''. Dans une première étape on fixe, par sa face 80, opposée à sa face 54 comportant les plages externes de contact électrique, le module électronique 50 sur la face 36b du support photographique 36. Le module 50 doit bien sûr être placé convenablement par rapport au support photographique 36 qui définit également la face principale postérieure de la carte. La fixation est réalisée à l'aide d'une couche 82 de matériau adhésif dont l'épaisseur e est telle que l'épaisseur E de l'ensemble formé par le support photographique 36 et le module électronique 50 soit très légèrement supérieure à l'épaisseur finale du corps de carte.

Le moule 10'' étant ouvert, on introduit dans celui-ci l'ensemble qui vient d'être décrit. La face 36a sensible du support photographique 36 est appliquée contre la face 22 du moule et le système d'aspiration 34 est mis en route. Puis on referme le moule. Le contact entre la face 18 du moule et la face d'accès 54 du module électronique 50 provoque un léger écrasement de la couche 82 d'adhésif pour les raisons indiquées précédemment. La face 54 du module électronique se trouve en regard des trous d'aspiration 40. Le système de pompage 42 est mis en route à son tour. Enfin, on procède à l'injection sous pression du matériau plastique transparent par la buse 26.

L'avantage de ce troisième mode de mise en oeuvre est que le module électronique est déjà positionné par rapport au support photographique et que la mise en place dans le moule du support photographique et du module électronique se fait en une seule manipulation. La carte obtenue est identique à celle qui est représentée sur les figures 4 à 6.

Dans le cas où l'on veut réaliser une carte à piste magnétique ou optique, on utilisera avantageusement le moule 10 de la figure 1 dans lequel le noyau 24 a été supprimé. A partir du corps de carte ainsi obtenu par moulage, on fixe par tout moyen convenable connu sur le recto 74 du corps de carte la ou les pistes magnétiques ou optiques.

En variante, on peut également réaliser directement par moulage la carte avec sa piste magnétique ou optique. Pour celà on utilise le moule 10' de la figure 2. On met en place contre la paroi 22 du moule le support photographique et on place contre la paroi 18 du moule la piste magnétique ou optique, celle-ci étant maintenue en place par des trous d'aspiration, tels que 40, convenablement disposés. On procède ensuite à l'injection du matériau plastique. La piste magnétique peut également être réalisée dans le moule par une technique connue de transfert à chaud et sous pression.

Dans les modes de réalisation décrits précédemment, on a envisagé le cas où le matériau de moulage est transparent et le support photographique comporte un graphisme à son dos, graphisme qui est visible à travers le corps de carte transparent. Il va cependant de soi que l'invention s'appliquer également au cas où le matériau de moulage est non transparent, par exemple blanc. Dans ce cas, le support photographique ne comporte plus de graphisme sur son verso. En revanche il est alors nécessaire de réaliser, par toute technique convenable, un graphisme sur le recto du corps de carte.

## Revendications

1. Procédé de réalisation d'une carte à mémoire comprenant un élément mémoire (50) et un corps (62) présentant deux faces principales sensiblement parallèles, une desdites faces principales étant munie d'un support photographique à développement rapide (36) présentant une face comprenant une couche détachable de protection, un film photographique et un moyen porteur des agents de développement ; ledit procédé comprenant les étapes suivantes :
- on fournit un support photographique (36) présentant une face sensible (36a) et ayant sensiblement les mêmes dimensions que lesdites faces principales ;
- on fournit un moule (10, 10', 10'') dont la cavité (16) a la forme du corps de carte à réaliser ;
- on dispose dans la cavité dudit moule ledit support photographique de telle manière que sa face sensible soit maintenue contre une des parois internes (22) de la cavité du moule qui définit la première face principale du corps de carte ;
- on injecte sous pression dans le moule un matériau plastique de telle manière qu'il remplisse la totalité de ladite cavité et qu'il adhère à la deuxième face (36b) du support photographique ;
- on démoule l'objet ainsi obtenu ; et
- on fixe sur la deuxième face principale dudit corps de carte l'élément mémoire (50).

2. Procédé de réalisation d'une carte à mémoire comprenant un élément mémoire présentant une face d'accès, par laquelle les informations sont transmises entre l'élément mémoire de la carte et un lecteur de carte et un corps (62) présentant deux faces principales sensiblement parallèles, une desdites faces principales étant munie d'un support photographique à développement rapide (36) présentant une face comprenant une couche détachable de protection, un film photographique et un moyen porteur des agents de développement ; ledit procédé comprenant les étapes suivantes :
- on fournit un support photographique à développement rapide présentant une face sensible (36a) et ayant sensiblement les mêmes dimensions que lesdites faces principales ;
- on fournit un élément mémoire présentant une face d'accès ;
- on fournit un moule (10, 10', 10'') dont la cavité (16) a la forme du corps de carte à réaliser.
- on dispose dans la cavité dudit moule ledit support photographique de telle manière que sa face sensible soit maintenue contre une des parois internes (22) de la cavité du moule qui définit la première face principale du corps de carte ;
- on dispose dans la cavité dudit moule ledit élément mémoire (50) de telle manière que sa face d'accès (54) soit maintenue contre la paroi interne (18) de la cavité du moule qui définit la deuxième face principale du corps de carte ;
- on injecte sous pression dans le moule un matériau plastique de telle manière qu'il remplisse la totalité de ladite cavité et qu'il adhère à la deuxième face (36b) du support photographique ; et
- on démoule l'objet ainsi obtenu.

3. Procédé selon la revendication 1 pour réaliser une carte à module électronique(50), caractérisé en ce que la paroi interne (18) de la cavité du moule définissant la deuxième face principale du corps de carte présente une partie en saillie (24) pour définir un évidement dans ledit corps de carte (62), et en ce qu'on fixe ledit module électronique dans ledit évidement de telle manière que sa face d'accès (54) soit sensiblement disposée dans le même plan que la deuxième face principale (74) du corps de carte.

4. Procédé selon la revendication 2, caractérisé en ce que ledit élément mémoire est un module électronique (50) présentant une face d'accès (54) et une face postérieure (56) et en ce que pour mettre en place dans le moule ledit support photographique (36) et ledit module électronique (50), on fixe ledit module électronique par sa face postérieure (56) sur la face non sensible (36b) dudit support photographique (36) et on met en place dans le moule (10'') l'ensemble ainsi constitué.

5. Procédé selon l'une quelconque des revendications 1 à 4, caractérisé en ce que ledit moyen porteur des agents de développement rapide est un papier de développement (68) et que l'élément de protection (64) est amovible par rapport audit papier de développement.

6. Procédé selon la revendication 5, caractérisé en ce que ledit matériau plastique d'injection est transparent et en ce que le dos dudit papier de développement est muni d'éléments graphiques (70).

7. Procédé selon l'une quelconque des revendications 1 à 6, caractérisé en ce que ledit élément mémoire (50) comporte une zone (58) dans laquelle on peut inscrire une information d'identification.

8. Carte à mémoire apte à recevoir une image photographique comprenant :
- un corps de carte (63) présentant deux faces principales sensiblement parallèles (61, 74) ;
- un élément mémoire (50) présentant une face d'accès (54), par laquelle les informations sont transmises entre l'élément mémoire de la carte et un lecteur de carte, ledit élément mémoire étant fixé audit corps de carte pour que sa face d'accès soit sensiblement dans le plan de la première face principale du corps de carte ; et
- un support photographique à développement rapide (36) présentant une face comprenant une couche détachable de protection, un film photographique et un moyen porteur des agents de développement, ayant sensiblement les mêmes dimensions que lesdites faces principales, présentant une face sensible (36a) et une face postérieure (36b), ledit support étant fixé sur la deuxième face principale (61) du corps de carte par sa face postérieure.

9. Carte à mémoire selon la revendication 8, caractérisée en ce que ledit élément mémoire est un module électronique (50) présentant des plages externes de contact électrique (72) disposées sensiblement dans le plan de la première face principale (74) du corps de carte.

10. Carte à mémoire selon l'une quelconque des revendications 8 et 9, caractérisée en ce que ledit corps de carte (61) est réalisé en un matériau plastique transparent et en ce que la face postérieure (36b) du support photographique (36) est munie de graphismes (72).

## Claims

1. A method of making a memory card comprising a memory element (50) and a body (62) having two substantially parallel main faces, one of said main faces being provided with a rapid development photographic substrate (36) having a face with a detachable protective layer, a photographic film, and means carrying developer agents; the method comprising the following steps:
a photographic substrate (36) is provided having a sensitive face (36a) and having substantially the same dimensions as said main faces;
a mold (10, 10', 10'') is provided having a cavity (16) of the same shape as the body of the card to be made;
said photographic substrate is placed in the cavity of said mold in such a manner that its sensitive face is held against one of the inner walls (22) of the mold cavity that defines the first main face of the card body;
a plastics material is injected under pressure into the mold in such a manner as to fill said cavity in full and to adhere to the second face (36b) of the photographic substrate:
the object obtained in this way is unmolded; and
the memory element (50) is fixed to the second main face of said card body.

2. A method of making a card comprising a memory element have an access face through which information passes between the memory element of the card and a card reader, and a body (62) having two substantially parallel main faces, one of said main faces being provided with a rapid development photographic substrate (36) having a face with a detachable protective layer, a photographic film, and means carrying developer agents; the method comprising the following steps:
a rapid development photographic substrate is provided having a sensitive face (36a) and having substantially the same dimensions as said main faces;
a memory element having an access face is provided;
a mold (10, 10', 10'') is provided having a cavity (16) of the same shape as the body of the card to be made;
said photographic substrate is placed in the cavity of said mold in such a manner that its sensitive face is held against one of the inner walls (22) of the mold cavity that defines the first main face of the card body;
said memory element (50) is placed in the cavity of said mold in such a manner that its access face (54) is held against the inner wall (18) of the mold cavity that defines the second main face of the card body;
a plastics material is injected under pressure into the mold in such a manner as to fill said cavity in full and to adhere to the second face (36b) of the photographic substrate; and
the object obtained in this way is unmolded.

3. A method according to claim 1, for making a card having an electronics module (50), the method being characterized in that the inner wall (18) of the mold cavity defining the second main face of the card body has a projecting portion (24) to define a recess in said card body (62), and in that said electronics module is fixed in said recess in such a manner that its access face (54) is disposed in substantially the same plane as the second main face (24) of the card body.

4. A method according to claim 2, characterized in that said memory element is an electronics module (50) having an access face (54) and a back face (56), and in that to put said photographic substrate (36) and said electronics module (50) in the mold, said electronics module is fixed via its back face (56) to the non-sensitive face (36b) of said photographic substrate (36) and the resulting assembly is put into place in the mold (10'').

5. A method according to any one of claims 1 to 4, characterized in that said means carrying rapid development agents is developing paper (68) and that the protective element (64) is removable from said developing paper.

6. A method according to claim 5, characterized in that said injection plastics material is transparent and in that the back of said developing paper is provided with marks (70).

7. A method according to any one of claims 1 to 6, characterized in that said memory element (50) includes a zone (58) in which it is possible to record identity information.

8. A memory card suitable for receiving a photographic image, and comprising:
a card body (63) having two substantially parallel main faces (61, 74);
a memory element (50) having an access face (54) via which information passes between the memory element of the card and a card reader, said memory element being fixed to said card body so that its access face lies substantially in the same plane as the first main face of the card body; and
a rapid development photographic substrate (36) having a face that includes a detachable protective layer, a photographic film, and means carrying agents having substantially the same dimensions as the main faces, presenting a sensitive face (36a) and a back face (36b), said substrate being fixed on the second main face (61) of the card body via its back face.

9. A memory card according to claim 8, characterized in that said memory element is an electronics module (50) having external electrical contact tabs (72) disposed substantially in the same plane as the first main face (74) of the card body.

10. A memory card according to claim 8 or 9, characterized in that said card body (61) is made of a transparent plastics material, and in that the back face (36b) of the photographic substrate (36) is provided with marks (72).

## Patentansprüche

1. Verfahren zum Herstellen einer Speicherkarte, umfassend ein Speicherelement (50) und einen zwei im wesentlichen parallele Hauptseiten aufweisenden Korpus (62), wobei eine der Hauptseiten mit einem Schnellentwicklungsfototräger (36) versehen ist mit einer Seite, die eine lösbare Schutzschicht umfaßt, einen fotografischen Film sowie ein entwicklungschemikalientragendes Mittel, welches Verfahren die folgenden Schritte umfaßt:
- man stellt einen fotografischen Träger (36) mit einer empfindlichen Seite (36a) und im wesentlichen denselben Abmessungen wie die genannten Hauptseiten bereit;
- man stellt eine Form (10, 10', 10'') bereit, deren Formhohlraum (16) die Form des Korpus der herzustellenden Karte aufweist;
- man legt in den Formhohlraum den fotografischen Träger derart ein, daß seine empfindliche Seite gegen eine der Innenwandungen (22) des Formhohlraums gehalten wird, der die erste Hauptseite des Kartenkorpus begrenzt;
- man injiziert unter Druck in die Form ein Kunststoffmaterial derart, daß es die Gesamtheit des Hohlraums füllt und an der zweiten Seite (36b) des fotografischen Trägers anhaftet;
- man entformt das so erhaltene Objekt; und
- man befestigt auf der zweiten Hauptseite des Kartenkorpus das Speicherelement (50).

2. Verfahren zum Herstellen einer Speicherkarte mit einem Speicherelement, das eine Zugangsseite aufweist, über die die Informationen zwischen dem Speicherelement der Karte und einem Kartenlesegerät übertragen werden, und mit einem Korpus (62), der zwei im wesentlichen parallele Hauptseiten aufweist, wobei eine der Hauptseiten mit einem fotografischen Schnellentwicklungsträger (36) versehen ist, welcher eine Seite aufweist mit einer lösbaren Schutzschicht, mit einem fotografischen Film und einem Mittel als Träger für Entwicklungschemikalien, welches Verfahren die folgenden Schritte umfaßt:
- man stellt einen fotografischen Schnellentwicklungsträger bereit mit einer empfindlichen Seite (36a) und im wesentlichen denselben Abmessungen wie die Hauptseiten;
- man stellt ein Speicherelement bereit mit einer Zugangsseite;
- man stellt eine Form (10, 10', 10'') bereit, deren Formhohlraum (16) die Form des Korpus der herzustellenden Karte aufweist;
- man ordnet im Hohlraum der Form den fotografischen Träger derart an, daß seine empfindliche Seite gegen eine der Innenwandungen (22) des Formhohlraums gehalten wird, welche die erste Hauptseite des Kartenkorpus begrenzt;
- man ordnet in dem Formhohlraum das Speicherelement (50) derart an, daß seine Zugangsseite (54) gegen die Innenwandung (18) des Formhohlraums gehalten wird, die die zweite Hauptseite des Kartenkorpus begrenzt;
- man injiziert unter Druck in die Form ein Kunststoffmaterial derart, daß es die Gesamtheit des Formhohlraums füllt und das an der zweiten Seite (36b) des fotografischen Trägers anhaftet; und
- man entformt das so erhaltene Objekt.

3. Verfahren nach Anspruch 1 zum Herstellen einer Karte mit elektronischem Modul (50), dadurch gekennzeichnet, daß die Innenwandung (18) des Formhohlraums, die die zweite Hauptseite des Kartenkorpus begrenzt, einen Vorsprung (24) aufweist zum Definieren einer Ausnehmung in dem Kartenkorpus (62), und daß man den elektronischen Modul in der Ausnehmung derart befestigt, daß seine Zugangsseite (54) im wesentlichen in derselben Ebene angeordnet ist wie die zweite Hauptseite (74) des Kartenkorpus.

4. Verfahren nach Anspruch 2, dadurch gekennzeichnet, daß das Speicherelement ein elektronischer Modul (50) mit einer Zugangsseite (54) und einer Rückseite (56) ist, und daß man, um in die Form den fotografischen Träger (36) und den elektronischen Modul (50) einzusetzen, man den elektronischen Modul mit seiner Rückseite (56) an der unempfindlichen Seite (36b) des fotografischen Trägers (36) befestigt und die so gebildete Baugruppe in die Form (10'') plaziert.

5. Verfahren nach einem der Ansprüche 1 bis 4, dadurch gekennzeichnet, daß das Trägermittel für Schnellentwicklungschemikalien ein Entwicklerpapier (68) ist und daß das Schutzelement (64) relativ zu dem Entwicklerpapier entfernbar ist.

6. Verfahren nach Anspruch 5, dadurch gekennzeichnet, daß das Kunststoffeinspritzmaterial transparent ist und daß der Rücken des Entwicklerpapiers mit Graphikelementen (70) versehen ist.

7. Verfahren nach einem der Ansprüche 1 bis 6, dadurch gekennzeichnet, daß das Speicherelement (50) eine Zone (58) umfaßt, in die eine Identifikationsinformation einschreibbar ist.

8. Speicherkarte, ausgebildet zum Aufnehmen eines fotografischen Abbilds, umfassend:
- einen Kartenkorpus (63) mit zwei im wesentlichen parallelen Hauptseiten (61, 74);
- ein Speicherelement (50) mit einer Zugangsseite (54), über die Informationen zwischen dem Speicherelement der Karte und einem Kartenlesegerät austauschbar sind, welches Speicherelement an dem Kartenkorpus befestigt ist derart, daß seine Zugangsseite im wesentlichen in der Ebene der ersten Hauptseite des Kartenkorpus liegt; und
- einen fotografischen Schnellentwicklungsträger (36) mit einer Seite, die eine ablösbare Schutzschicht aufweist, einen fotografischen Film sowie ein Trägermittel für Entwicklungschemikalien mit im wesentlichen denselben Abmessungen wie die Hauptseiten, welcher fotografische Träger eine empfindliche Seite (36a) und eine Rückseite (36b) aufweist und auf der zweiten Hauptseite (61) des Kartenkorpus mit seiner Rückseite befestigt ist.

9. Speicherkarte nach Anspruch 8, dadurch gekennzeichnet, daß das Speicherelement ein elektronischer Modul (50) ist, der externe elektrische Kontaktfelder (72) aufweist, die im wesentlichen in der Ebene der ersten Hauptseite (74) des Kartenkorpus liegen.

10. Speicherkarte nach einem der Ansprüche 8 und 9, dadurch gekennzeichnet, daß der Kartenkorpus (61) aus einem transparenten Kunststoffmaterial hergestellt ist und daß die Rückseite (36b) des fotografischen Trägers (36) mit Graphiken (72) versehen ist.
